# EUROPEAN PATENT APPLICATION

(11) **EP 1 947 820 A1**
(43) Date of publication of application: **23.07.2008**
(21) Application number: 07001344.6
(22) Date of filing: 22.01.2007
(51) Int. Cl.: H04L 29/06

(54) **Method and device for providing a resolution information to an application server and communication system comprising such device**

(71) Applicant: Siemens Networks GmbH & Co KG, 80506 München (DE)
(72) Inventor: Leis, Peter, 82377 Penzberg (DE); Shen, Jiadong, Dr., 81379 München (DE)
(74) Representative: Maier, Daniel Oliver

(57) **Abstract**

A method and a device are presented for providing a resolution information to an application server of an IP Multimedia Subsystem (IMS) comprising the step that a communication function sends the resolution information to the application server. Also, a communication system comprising such device is provided. The resolution information may be the address of a House Subscriber Server (HSS), and may be provided to the application server by an Interrogating Call Session Control Function, I-CSCF, or a Serving Call Session Control Function, S-CSCF.

## Description

The invention relates to a method and a device for providing a resolution information to an application server and a communication system comprising such device.

Document TS 23.228 V7.6.0 (2006-12) of the 3rd Generation Partnership Project (3GPP), entitled "Technical Specification Group Services and System Aspects; IP Multimedia Subsystem (IMS); Stage 2 (Release 7)" describes IP multimedia subsystem concepts, wherein the IP multimedia core network (CN) subsystem comprises all core network elements for provision of multimedia services. This includes the collection of signaling and bearer related network elements as defined in TS 23.002. IP multimedia services are based on an IETF (Internet Engineering Taskforce) defined session control capability which, along with multimedia bearers, utilizes the IP-Connectivity Access Network.

In order to achieve access independence and to maintain a smooth interoperation with wireline terminals across the Internet, the IP multimedia subsystem attempts to be conformant to IETF "Internet standards". Therefore, the interfaces specified conform as far as possible to IETF "Internet standards" for the cases where an IETF protocol has been selected, e.g. a Session Initiation Protocol (SIP).

The IP multimedia core network (IM CN) subsystem enables Public Land Mobile Network (PLMN) operators to offer their subscribers multimedia services based on and built upon Internet applications, services and protocols.

The IM CN subsystem should enable the convergence of, and access to, voice, video, messaging, data and web-based technologies for the wireless user, and combine the growth of the Internet with the growth in telecommunications.
The complete solution for the support of IP multimedia applications consists of terminals, IP-Connectivity Access Networks (IP-CAN), and the specific functional elements of the IM CN subsystem.

An example of IP-Connectivity Access Network is the GPRS core network with GERAN and/or UTRAN radio access networks.

Within the 3GPP IP Multimedia Core Network Subsystem (IMS) the user profiles are stored in a Home Subscriber Server (HSS). Different network elements of the IMS can access these user profiles. An Interrogating Call Session Control Function (I-CSCF) and a Serving Call Session Control Function (S-CSCF) access the HSS via a Cx interface, an Application Server (AS) accesses the HSS via an Sh interface.

As there may be multiple HSSs existing in the IMS network, each of which with an own address, the so-called Subscription Locator Function (SLF) is used to resolve the HSS address for each user of the IMS.

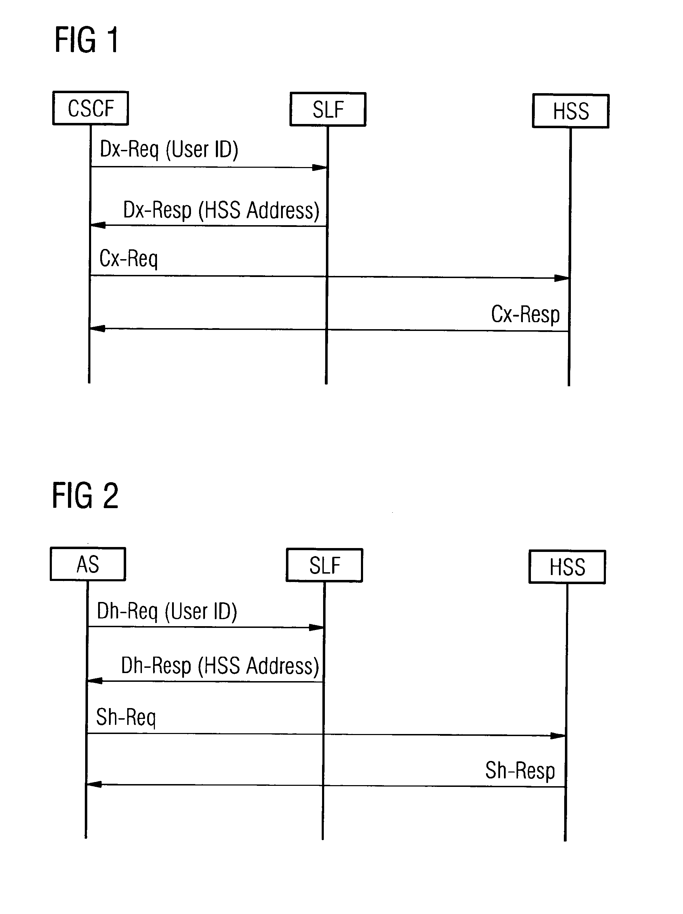

According to Fig.1, an Interrogating Call Session Control Function (I-CSCF) as well as a Serving Call Session Control Function (S-CSCF), both shown as a Subscription Locator Function in Fig.1, use a Dx interface to access the Subscription Locator Function (SLF): A "Dx-Req (User ID)"-message is sent from the Call Session Control Function (CSCF) to the Subscription Locator Function (SLF) and, as a response, the Subscription Locator Function (SLF) sends a "Dx-Resp (HSS Address)"-message containing the HSS address information.

In Fig.2, the Application Server (AS) sends a "Dh-Req (User ID)"-message to the Subscription Locator Function (SLF) and receives the HSS address information via a "Dh-Resp (HSS Address)"-message from the Subscription Locator Function (SLF).

After the Call Session Control Function (CSCF) of Fig.1 has received the HSS Address information, the Call Session Control Function (CSCF) can access the Home Subscriber Server (HSS) via a "Cx-Req"-message and obtains a "Cx-Resp"-message from the Home Subscriber Server (HSS) via the Cx interface.

After the Application Server (AS) of Fig.2 has received the HSS Address information, the Application Server (AS) can access the Home Subscriber Server (HSS) via an "Sh-Req"-message and obtains an "Sh-Resp"-message from the Home Subscriber Server (HSS) via the Sh interface.

The usage of the Dx interface and the Dh interface for the HSS address resolution prior to accessing the user profile in the HSS leads to additional message exchanges, thereby deteriorating the performance of the system.

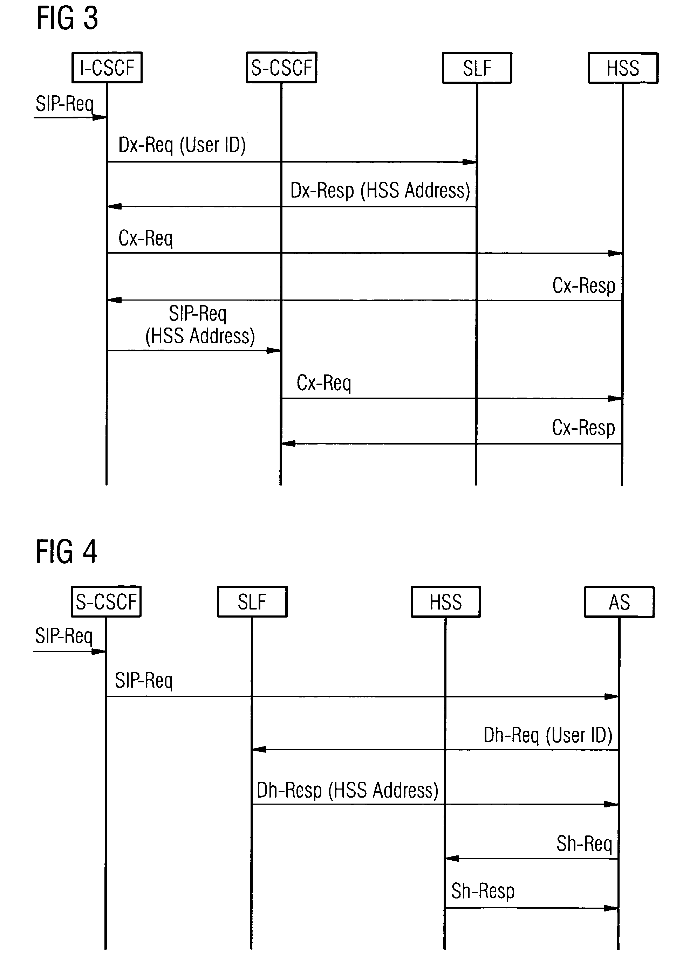

To reduce the performance impact, RFC 4457 describes how the HSS address resolved by the Interrogating Call Session Control Function (I-CSCF) can be reused by the Serving Call Session Control Function (S-CSCF). According to RFC 4457, the address of the Home Subscriber Server (HSS) can be included in Session Initiation Protocol (SIP) messages sent from the Interrogating Call Session Control Function (I-CSCF) to the Serving Call Session Control Function (S-CSCF). The Serving Call Session Control Function (S-CSCF) then can access the Home Subscriber Server (HSS) via the Cx interface without any additional Dx query from the Serving Call Session Control Function (S-CSCF) to the Subscription Locator Function (SLF) (see Fig.3).

However, the current standards (IETF RFC4457 and 3GPP 24.229) only allow for the reuse of the HSS address resolution for Cx queries from the Serving Call Session Control Function (S-CSCF). As shown in Fig.4, the Application Server (AS) still has to resolve the HSS address via Dh procedures, i.e. messages "Dh-Req (User ID)" and "Dh-Resp (HSS Address)" before the Application Server (AS) is able to access the Home Subscriber Server (HSS) via the Sh interface (see messages "Sh-Req" and "Sh-Resp").

The object to be solved is overcome the disadvantages as described supra and hence to improve the performance of the communication system.

This problem is solved according to the features of the independent claims. Further embodiments result from the depending claims.

In order to overcome this problem a method is presented for providing a resolution information to an application server comprising the step that a communication function sends the resolution information to the application server.

Hence, the resolution information can be sent - preferably when being made available - from the communication function to the application server. This allows the application server to access further units, e.g., a Home Subscriber Server (HSS), via said resolution information.

It is an embodiment that the communication function is a Call Session Control Function (CSCF), in particular an Interrogating Call Session Control Function (I-CSCF) or a Serving Call Session Control Function (S-CSCF). Hence, the method can be applied to a communication network, in particular to an IP multimedia (sub)system (IMS).

In another embodiment, the resolution information is an address resolution information, in particular an address to a Home Subscriber Server (HSS).

In yet another embodiment, the resolution information is an HSS address information sent to the Application Server that can be further used by the Application Server via an Sh interface of the communication network.

Furthermore, the resolution information can be obtained by the communication function pursuant to a request message, in particular a message of the Session Initiation Protocol (SIP). In addition or alternatively, the resolution information can be obtained from a Subscription Locator Function (SLP) or from another communication function.

Moreover, in order to solve the problem stated supra, it is presented a device for providing a resolution information to an application server comprising a processor unit that is equipped or that may be arranged such that the method described herein can be executed on said processor. As an alternative, said processor could also be a thread, a process, a microcontroller or the like.

In an embodiment, the device comprises a communication function that sends the resolution information to the application server. The communication function may be an Interrogating Call Session Control Function (I-CSCF) or a Serving Call Session Control Function (S-CSCF). The resolution information may be an address information related to a Home Subscriber Server (HSS).

In an advanced embodiment, the device is a communication device, in particular a device of or located within a communication system, in particular an IP multimedia (sub) system (IMS).

It is further provided a communication system to solve the object as stated supra, said communication system comprising at least one of the devices as described herein.

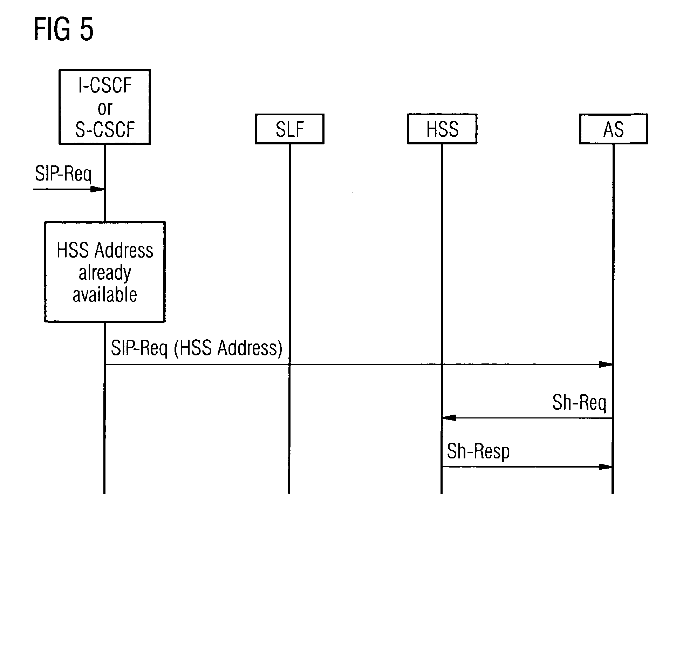

Embodiments of the invention are shown and illustrated in Fig.5 that shows a flowchart of messages between several units of a communication system.

An Interrogating Call Session Control Function I-CSCF or a Serving Call Session Control Function S-CSCF receive a request message of the Session Initiation Protocol "SIP-Req". Subsequent to this message "SIP-Req" the Interrogating Call Session Control Function I-CSCF or the Serving Call Session Control Function S-CSCF obtain a resolution information "HSS Address" from a Subscription Locator Function (SLF); alternatively, this resolution information "HSS Address" could be made available before via, e.g., a message containing this "HSS Address" sent by a Call Session Control Function CSCF (see, e.g., Fig.3).

The Interrogating Call Session Control Function I-CSCF or the Serving Call Session Control Function S-CSCF initiates a message
"SIP-Req (HSS Address)"
of the Session Initiation Protocol SIP to be sent to the Application Server AS containing the resolution information "HSS Address". This informs the Application Server AS about the resolution information "HSS Address" that can be used thereinafter by the Application Server AS. In this case, there is no need for the Application Server AS itself to send such request to the Subscription Locator Function SLF.

As any such request from the Application Server to AS the Subscription Locator Function SLF is rendered unnecessary, the Dh interface used for such kind of requests does not need to be implemented within the Application Server AS.

In case the Interrogating Call Session Control Function I-CSCF or the Serving Call Session Control Function S-CSCF receives a Session Initiation Protocol (SIP) request containing the result of the HSS address resolution in the P-User-Database header as per RFC 4457, the Interrogating Call Session Control Function I-CSCF or the Serving Call Session Control Function S-CSCF may include the "HSS Address" in the P-User-Database header in requests forwarded to the Application Server AS.

In mobile originating cases, this Session Initiation Protocol (SIP) message will be a 3rd party REGISTER triggered by the REGISTER received from the user.

In mobile terminating cases, this will be an initial request for a dialog or a request for a standalone transaction.

In case no P-User-Database header is contained in the incoming SIP request, but the Interrogating Call Session Control Function I-CSCF or the Serving Call Session Control Function S-CSCF has the "HSS Address" for the IP Multimedia Subsystem (IMS) user related to this Session Initiation Protocol (SIP) request available, the Interrogating Call Session Control Function I-CSCF or the Serving Call Session Control Function S-CSCF may include the already available "HSS Address" in the P-User-Database header in the Session Initiation Protocol (SIP) requests sent to the Application Server AS.

In addition, the Application Server AS may reuse the resolution for Sh interface. When the Application Server AS receives the Session Initiation Protocol (SIP) request containing the HSS address resolution, it may reuse this resolution for the HSS access via the Sh interface.

This proposal leads in particular to the following advantages:
- The Application Server AS does not need to resolve the HSS address via the Dh interface thereby avoiding additional message exchange and deterioration of the performance of the communication system.
- The solutions suggested only require limited effort of adaptation for the Interrogating Call Session Control Function I-CSCF or the Serving Call Session Control Function S-CSCF as well as for the Application Server AS.
- The solutions suggested are compliant with the existing resolution procedure via the Dh interface.
- In case all Application Servers AS within the IP Multimedia Subsystem network support this solution, the Dh interface can be saved.

## Claims

1. A method for providing a resolution information to an application server comprising the following step:
- A communication function sends the resolution information to the application server.

2. The method according to claim 1, wherein the communication function sends the resolution information to the application server after being notified of the resolution information from a further unit.

3. The method according to any of the preceding claims, wherein the communication function is an interrogating call session control function (I-CSCF) or a serving call session control function (S-CSCF).

4. The method according to any of the preceding claims being applied to a communication network, in particular to an IP multimedia system (IMS).

5. The method according to any of the preceding claims, wherein the resolution information is an address resolution information.

6. The method according to any of the preceding claims, wherein the resolution information is an address obtained to a home subscriber server (HSS).

7. The method according to any of the preceding claims, wherein the resolution information is an HSS address information sent to the Application Server that can be further used by the Application Server via an Sh interface.

8. The method according to any of the preceding claims, wherein the resolution information is obtained by the communication function pursuant to a request message, in particular a message according to the session initiation protocol (SIP).

9. The method according to any of the preceding claims, wherein the communication function obtains the resolution information from a subscription locator function (SLP) or from an another communication function.

10. A device for providing a resolution information to an application server comprising a processor unit that is equipped / arranged such that the method according to any of the preceding claims is executable on said processor.

11. The device of claim 10, comprising a communication function that sends the resolution information to the application server.

12. The device according to any of claims 10 or 11, wherein said communication function is an interrogating call session control function (I-CSCF) or a serving call session control function (S-CSCF).

13. The device according to any of claim 10 to 12, wherein said device is a communication device, in particular within an IP multimedia system (IMS).

14. Communication system comprising a device according to any of claims 10 to 13.
